**Europäisches Patentamt**

(19) **European Patent Office**

**Office européen des brevets**

(11) Veröffentlichungsnummer: **0 061 604**
**B1**

(12) # EUROPÄISCHE PATENTSCHRIFT

(45) Veröffentlichungstag der Patentschrift:
13.02.85

(51) Int. Cl.⁴: **H 02 P 7/62**

(21) Anmeldenummer: **82101733.2**

(22) Anmeldetag: **05.03.82**

(54) Vorrichtung zur Regelung von Drehzahl und/oder Drehmoment einer Asynchronmaschine mit I-Zwischenkreis-Umrichter.

(30) Priorität: **28.03.81 DE 3112325**

(43) Veröffentlichungstag der Anmeldung:
**06.10.82 Patentblatt 82/40**

(45) Bekanntmachung des Hinweises auf die Patenterteilung:
**13.02.85 Patentblatt 85/7**

(84) Benannte Vertragsstaaten:
**AT CH GB IT LI NL SE**

(56) Entgegenhaltungen:
**EP - A - 0 019 138**
**DE - A - 2 818 933**

**REGELUNGSTECHNISCHE PRAXIS UND PROZESS-RECHENTECHNIK, Band 15, Heft 9, September 1973, Seiten 217-221, München, DE. H. BECKER: "Dynamisch hochwertige Drehzahlregelung einer umrichtergespeisten Asynchronmaschine"** SIEMENS-ZEITSCHRIFT, Band 45, Heft 10, Oktober 1971, Seiten 757-760, Erlangen, DE. F. BLASCHKE: **"Das Prinzip der Feldorientierung, die Grundlage für die TRANSVEKTOR-Regelung von Drehfeldmaschinen"** SIEMENS-ZEITSCHRIFT, Band 45, Heft 10, Oktober 1971, Seiten 753-757, Erlangen, DE. K. BOHM et al.: **"Drehzahlregelbare Drehstromantriebe mit Umrichterspeisung"**

(73) Patentinhaber: **BROWN, BOVERI & CIE Aktiengesellschaft, Kallstadter Strasse 1, D-6800 Mannheim 31 (DE)**

(72) Erfinder: **Lisner, Herbert, Dipl.-Ing., Georg-Ludwig-Krebs-Strasse 8, D-6700 Ludwigshafen (DE)**
Erfinder: **Michalak, Peter, Stettiner Strasse 76, D-6940 Weinheim (DE)**

(74) Vertreter: **Kempe, Wolfgang, Dr. et al, c/o BROWN, BOVERI & CIE AG Kallstadter Strasse 1 Postfach 351, D-6800 Mannheim 31 (DE)**

## Beschreibung

Die Erfindung betrifft eine Vorrichtung zur Regelung von Drehzahl und/oder Drehmoment einer Asynchronmaschine, die von einem Zwischenkreisumrichter mit eingeprägtem Strom gespeist wird, mit einem Stromregelkreis, der auf den Gleichrichterteil des Umrichters einwirkt, mit einem Stromwinkelregelkreis, der einen Stromwinkelsummierer zur Bildung der Differenz zwischen Sollwert und Istwert des Stromwinkels enthält, einem Stromwinkelregler, der aus der Sollwert-Istwert-Differenz des Stromwinkels die Führungsgröße für die Frequenz des Ständerstromes am Ausgang des Wechselrichterteils ableitet und mit einer Koordinatentransformation, bei der die Signale für Luftspaltfluß und Drehzahl bzw. Drehmoment aus dem rechtwinkligen Koordinatensystem in das Polarkoordinatensystem transformatiert werden.

Eine derartige Vorrichtung zur Regelung von Drehzahl und/oder Drehmoment einer Asynchronmaschine mit I-Zwischenkreis-Umrichter ist aus der DE-A-2 818 933 bekannt. Dabei ist ein Istwertrechner zur Ermittlung des Sinus und des Cosinus des Stromwinkels aus dem Maschinenstrom und der Maschinenspannung vorgesehen. Alternativ hierzu kann der Stromwinkel auch direkt berechnet werden. In beiden Fällen beeinflußt der Stromwinkelregler unmittelbar den Steuersatz des Wechselrichterteils.

Aus der EP-A-19 138 ist des weiteren eine Anordnung zur Regelung einer Asynchronmaschine bekannt, bei der die Asynchronmaschine von einem Zwischenkreisumrichter gespeist wird, und die einen Stromregler zur Einwirkung auf den Gleichrichterteil des Umformers, einen Lastzustandsregler zur Einwirkung auf den Wechselrichterteil des Umformers und eine Koordinatentransformationseinrichtung aufweist.

Bei dieser Regelung wird anstelle des aus der DE-A-2 818 933 bekannten Stromwinkelreglers, der aufgrund des direkten Vergleichs von Soll- und Iststromwinkel tätig wird, zur Steuerung des Wechselrichterteils des Umformers ein Lastzustandsregler eingesetzt, welcher als Eingangsgröße die Abweichung zwischen Soll- und Istlastzustand erhält. Als Lastzustand ist der Quotient aus Wirkstrom und Fluß definiert, wobei die Istwerte dieser beiden Größen aus den mittels Meßwandlern abgegriffenen Klemmengrößen für Ständerstrom und Ständerspannung errechnet werden.

Eine zur eingangs erwähnten Vorrichtung ähnliche Steuer- und Regeleinrichtung ist ferner bekannt aus »ETZ-Archiv« (1979), Heft 12, Seite 341 bis 345, insbesondere Bild 5. Diese bekannte Einrichtung enthält einen Stromregelkreis, der auf den Gleichrichterteil des Umrichters wirkt und der zusammen mit der Zwischenkreisdrossel dafür sorgt, daß im Zwischenkreis ein eingeprägter Strom fließt. Bei dem Regelkreis, der auf den Wechselrichterteil des Umrichters wirkt, handelt es sich um einen üblichen Frequenzregelkreis, der die mechanische Rotordrehzahl mit Hilfe eines Tachogenerators mißt, diesen Istwert mit einem vorgegebenen Sollwert vergleicht und daraus die Steuergröße für die Frequenz des Wechselrichterteils errechnet. Der Sollwert für den Stromregelkreis wird in einem Entkopplungsnetzwerk ermittelt, das einen Koordinatenwandler enthält, in dem die an seinem Eingang eingegebenen Größen für Luftspaltfluß und Drehmoment aus dem rechtwinkligen Koordinatensystem in das Polarkoordinatensystem umgewandelt werden. Das am Ausgang des Koordinatenwandlers anstehende Signal für den Stromwinkel zwischen dem Luftspaltflußvektor und dem Ständerstromvektor wird differenziert und auf die Steuergröße für die Frequenz des Wechselrichterteils aufgeschaltet.

Dieser bekannten Steuer- und Regeleinrichtung liegt ebenso wie dem Anmeldungsgegenstand die Erkenntnis zugrunde, daß der Stromwinkel zwischen dem Luftspaltflußvektor und dem Ständerstromvektor nur im stationären Betriebszustand konstant ist. Bei dynamischen Vorgängen ändert sich dagegen dieser Stromwinkel. Das bedeutet, daß beispielsweise bei einer zusätzlichen Belastung der Asynchronmaschine der Luftspaltflußvektor langsamer rotiert als der von außen über den Wechselrichterteil des Umrichters vorgegebene Ständerstromvektor. Dieser Effekt wird bei der bekannten Steuer- und Regeleinrichtung durch die Aufschaltung einer Größe, die gleich der Änderung des Stromwinkels ist, auf die Steuergröße für die Frequenz des Ständerstroms kompensiert.

Diese bekannte Steuer- und Regeleinrichtung ermöglicht es, auf dem Weg über eine Störgrößenaufschaltung den Stromwinkel zwischen Luftspaltflußvektor und Ständerstromvektor auf dem Umweg über die Frequenz des Ständerstromes zu steuern. Der Stromwinkel selbst wird nicht gemessen, sondern aus der mechanischen Drehzahl des Rotors der Asynchronmaschine und dem vorgegebenen Luftspaltfluß errechnet. Die Asynchronmaschine soll eine weitgehende Analogie mit der strom- und drehzahlgeregelten, im Ankerkreis gespeisten Gleichstrom-Nebenschlußmaschine aufweisen. Es ist jedoch nicht ohne weiteres möglich, die Asynchronmaschine auch mit Feldschwächung zu betreiben.

Eine andere Möglichkeit zur Bestimmung des Vektors des Luftspaltflusses zeigt die Siemens-Zeitschrift 45 (1971), Heft 10, Seite 757 bis 760 in Bild 8. Im Luftspalt der Asynchronmaschine sind zwei Feldsonden 90° gegeneinander versetzt angeordnet, aus deren Ausgangssignal der Winkel des Luftspaltflußvektors analysiert wird.

Eine weitere Möglichkeit, eine von einem I-Zwischenkreisumrichter gespeiste Asynchronmaschine zu regeln, zeigt die ASEA-Zeitschrift 1978, Heft 3, Seite 59 bis 64, insbesondere Bild 5. Bei dieser bekannten Regeleinrichtung wird die Frequenz des Ständerstroms proportional zur Klemmenspannung der Asynchronmaschine gesteuert. Auf diesen Frequenzsteuerkreis wird bei geringen Belastungen eine Störgröße aufgeschaltet, die aus der Zwischenkreisleistung und der Ständerfrequenz berechnet wird. Hierbei wird die Tatsache ausgenutzt, daß die Höhe der Spannung im Zwischenkreis ein Maß für den Betriebszustand der Maschine ist.

Bei den beiden zuvor beschriebenen Regelverfahren (ETZ-Archiv, Siemens-Zeitschrift) wird die Tatsache ausgenutzt, daß der Vektor des Luftspaltflusses und der Vektor des Ständerstroms sich bei dynamischen Vorgängen in der Asynchronmaschine nicht gleich schnell drehen.

Bei den zuletzt beschriebenen Verfahren (ASEA-Zeitschrift) wird die unterschiedliche Drehfrequenz indirekt über die Höhe der Zwischenkreisspannung erfaßt und nur bei kleinen Belastungszuständen als Störgröße auf den Frequenzregelkreis aufgeschaltet. Bei der eingangs beschriebenen Regelung (ETZ-Archiv) wird dieser Effekt aus der Rotorfrequenz errechnet und ebenfalls als Störgröße auf den Frequenzregelkreis aufgeschaltet. Diese beiden Regelverfahren bieten damit bereits einen Vorteil gegenüber einer Vielzahl anderer Regelverfahren, die die unterschiedlichen Drehgeschwindigkeiten von Luftspaltflußvektor und Ständerstromvektor bei dynamischen Vorgängen ignorieren oder allenfalls durch in einem Funktionsgenerator abgelegte Erfahrungswerte berücksichtigen.

Nachteilig ist bei den Verfahren jedoch, daß die unterschiedliche Drehgeschwindigkeit von Luftspaltflußvektor und Ständerstromvektor aus sekundären Größen errechnet wird, was naturgemäß mit gewissen Fehlern behaftet ist, und daß es sich nur um eine Störgrößenaufschaltung handelt. Nachteilig ist ferner, daß vielfach die Asynchronmaschine mit einem Tachogenerator oder mit zwei im Luftspalt angeordneten Feldsonden ausgerüstet sein muß. Nachteilig ist ferner, daß Feldschwächbetrieb praktisch nicht möglich ist, da dann die Stabilität der Asynchronmaschine zurückgeht.

Der vorliegenden Erfindung liegt die Aufgabe zugrunde, eine Vorrichtung zur Regelung von Drehzahl und/oder Drehmoment einer Asynchronmaschine der eingangs genannten Art anzugeben, die der Asynchronmaschine die Dynamik einer Gleichstrommaschine verleiht, einen Reversierbetrieb ermöglicht und keinerlei Änderung bei der verwendeten Asynchronmaschine benötigt, wobei eine nachteilige Ermittlung der unterschiedlichen Drehgeschwindigkeiten von Luftspaltflußvektor und Ständerstromvektor aus sekundären Größen vermieden werden soll.

Diese Aufgabe wird dadurch gelöst, daß ein Gamma-Diskriminator durch Erfassen der Phasenverschiebung zwischen Ständerstrom und Ständerspannung der Asynchronmaschine den Stromwinkel zwischen dem Luftspaltflußvektor und dem Ständerstromvektor angenähert als Differenz zwischen 90° und dem Phasenverschiebungswinkel ermittelt und daß die Führungsgröße für den Wechselrichterteil gleichzeitig der Istwert in einem übergeordneten Regelkreis für Drehzahl bzw. Drehmoment der Asynchronmaschine ist.

In diesem Zusammenhang ist es aus der eingangs erwähnten EP-A-19 138 bekannt, die Führungskraft für den Wechselrichterteil gleichzeitig als Istwert in einem übergeordneten Regelkreis für Drehzahl bzw. Drehmoment der Asynchronmaschine heranzuziehen.

Durch die direkte Regelung des Winkels zwischen dem Luftspaltflußvektor und dem Ständerstromvektor ergibt sich eine einwandfreie Dynamik der Asynchronmaschine. Kippen ist nicht mehr möglich. Die Frequenz des Ständerstroms wird durch den Stromwinkelregelkreis immer so eingestellt, daß die Rotorfrequenz den dem momentanen Belastungszustand entsprechenden Wert annimmt, gleichgültig mit welcher mechanischen Drehzahl der Läufer dreht. Der Stromwinkelregler ist in der Lage, die Frequenz des Ständerstroms selbsttätig über den gesamten Bereich von praktisch Null bis zum Maximalwert zu verstellen und Kippen zu verhindern.

Vorzugsweise besitzt der Stromwinkelregler eine $PDT_1$-Charakteristik. Dadurch wird der Zusammenhang zwischen der Drehfrequenz $f_i$ des Ständerstromvektors, der Drehfrequenz $f_1$ des Luftspaltflußvektors und dem Stromwinkel $\gamma_i$ zwischen den beiden Vektoren gemäß der folgenden Gleichung berücksichtigt:

$$f_i = f_1 + T_N \cdot d\gamma_i/dt$$

Vorzugsweise bildet der Stromwinkelsummierer die Differenz zwischen dem Tangens des Stromwinkelsollwertes und dem Tangens des Stromwinkelistwertes. Auf diese Weise erreicht man bei allen in Frage kommenden Werten des Stromwinkels eine praktisch konstante Verstärkung im Regelkreis.

In diesem Zusammenhang ist es aus der EP-A-19 138 bekannt, daß die dort zu regelnde Lastzustandsgröße im stationären Fall dem Tangens des Stromwinkels entspricht, also von diesem abhängt.

Zur dynamischen Optimierung der Drehzahl- bzw. Drehmomentregelung soll die Verzögerung in Stromwinkelregelkreis möglichst gut mit der Verzögerung im Stromregelkreis übereinstimmen. Ständerstromamplitude und Ständerstromwinkel folgen dann den Vorgabewerten mit derselben Verzögerung. Dadurch bleibt der Fluß auch bei dynamischen Vorgängen konstant.

Anhand der Zeichnung soll die Erfindung sowie ihre Vorteile näher erläutert werden. Es zeigt

Fig. 1 das Vektordiagramm einer Asynchronmaschine im untersynchronen Lauf und

Fig. 2 eine Regelungsschaltung für die Drehzahl einer Asynchronmaschine, die von einem Zwischenkreisumrichter mit eingeprägtem Strom gespeist wird.

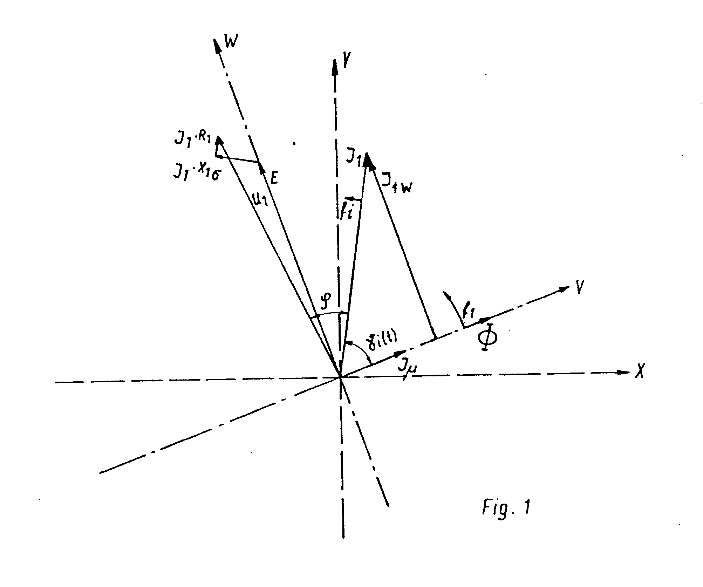

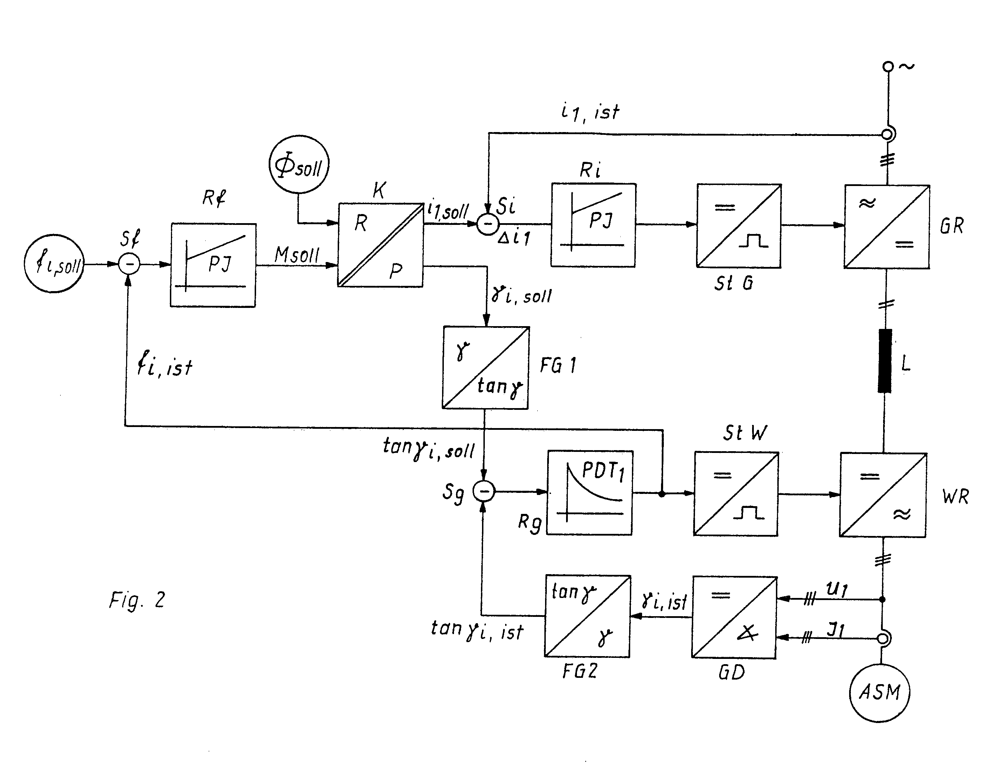

Das in Fig. 1 gezeigte Vektordiagramm ist eine Kombination aus Boedefeld/Sequenz »Elektrische Maschinen« 4. Auflage, 1949, Bild 235 mit »ETZ-Archiv« (1979), Heft 12, Seite 342, Bild 1. Man erkennt ein erstes rechtwinkliges Koordinatensystem mit den Koordinatenachsen X, Y, welches fest im Ständer der Maschine verankert sein soll. Man erkennt ein weiteres rechtwinkliges Koordinatensystem mit den Koordinatenachsen V, W, dessen Abszisse V mit dem Flußvektor zusammenfällt und das mit der Flußdrehfrequenz $f_1$ rotiert. Im rotierenden Koordinatensystem V, W sind die Strom- und Spannungsvektoren der Asynchronmaschine eingezeichnet, soweit sie hier von Bedeutung sind. Man erkennt den Magnetisierungsstrom $I\mu$, den Ständerstrom $I_1$ und den Ständerwirkstrom $I_{1w}$. Der Vektor des Magnetisierungsstromes $I\mu$ bzw. der Vektor $\Phi$ des Luftspaltflusses und der Vektor $I_1$ des Ständerstromes schließen einen Stromwinkel $\gamma_i(t)$ ein. Der Ständerstromvektor $I_1$ rotiert mit der Ständerstromdrehfrequenz $f_i$.

Senkrecht auf dem Vektor des Magnetisierungsstromes $I\mu$ bzw. des Luftspaltflusses $\Phi$ steht der Vektor der elektromorischen Kraft E. Zur elektromotorischen Kraft E addieren sich vektoriell die Spannungsabfälle im Ständerkreis. Die Summe entspricht genau der momentanen Ständerspannung $U_1$. Zwischen der Ständerspannung $U_1$ und dem Ständerstrom $I_1$ besteht die Phasenverschiebung $\varphi$.

Wie erwähnt, laufen der Flußvektor $\Phi$ mit der Drehfrequenz $f_1$, der Ständerstromvektor $I_1$ mit der Drehfrequenz $f_i$ gegenüber der Ständerwicklung um. Zwischen beiden befindet sich der Stromwinkel $\gamma_i$, der sich mit der Schlupffrequenz ändert. Im stationären Betriebszustand sind die beiden Frequenzen $f_1$ und $f_i$ gleich. Bei dynamischen Vorgängen bleibt die Länge des Ständerstromvektors $I_1$ konstant, da die Stromamplitude vom Umrichter eingeprägt ist. Die Stromamplitude ändert sich erst nach Ablauf der dem Stromregelkreis immanenten Verzögerungszeit. Die Asynchronmaschine kann daher nur durch eine Änderung des Stromwinkels $\gamma_i$ reagieren.

Da der Stromwinkel $\gamma_i$ an den Klemmen der Asynchronmaschine nicht direkt gemessen werden kann und Sensoren für den Flußvektor $\Phi$ voraussetzungsgemäß nicht verwendet werden sollen, muß der Stromwinkel $\gamma_i$ auf dem Umweg über die Phasenverschiebung zwischen Ständerstrom $I_1$ und Ständerspannung $U_1$ gemessen werden. Hierbei muß allerdings die Winkelabweichung zwischen dem Vektor der elektromotorischen Kraft E und dem Vektor der Ständerspannung $U_1$ vernachlässigt werden. Es läßt sich zeigen, daß trotz dieser Vernachlässigung das Führungsverhalten eines Stromwinkelreglers besser ist als eines herkömmlichen Reglers, bei dem die dynamischen Änderungen des Stromwinkels $\gamma_i$ vernachlässigt oder über den Umweg über die Höhe der Zwischenkreisspannung oder die Höhe der Rotordrehzahl errechnet werden.

Fig. 2 zeigt einen Regelkreis für die Drehzahl einer Asynchronmaschine ASM, die über einen Umrichter, bestehend aus dem Gleichrichter GR, der Zwischenkreisdrossel L und dem Wechselrichterteil WR gespeist wird. Die Amplitude des Zwischenkreisstromes wird über einen herkömmlichen Stromregelkreis konstant gehalten.

Hierzu wird in einem Stromwandler auf der Netzseite der Istwert $i_{1,ist}$ des Netzstromes gemessen, in einem Strom-Summierer Si mit dem Sollwert $i_{1,soll}$ verglichen und auf den Eingang eines Stromreglers Ri mit PI-Charakteristik geschaltet. Die am Ausgang des Stromreglers Ri anstehende Größe steuert den Steuersatz StG des Gleichrichters GR so, daß sich ein eingeprägter Strom ergibt, der dem Sollwert $i_{1,soll}$ entspricht. An den Klemmen der Asynchronmaschine ASM werden Ständerstrom $I_1$ und Ständerspannung $U_1$ abgegriffen und an einen Gamma-Diskriminator GD geführt. Der Gamma-Diskriminator bestimmt aus der Phasenverschiebung $\varphi$ zwischen Ständerstrom $I_1$ und Ständerspannung $U_1$ den Istwert des Stromwinkels $\gamma_{i,ist}$. In einem Funktionsgenerator FG 2 wird aus dem Stromwinkel $\gamma_{i,ist}$ der Tangens gebildet und dann einem Gamma-Summierer Sg (Stromwinkelsummierer) zugeführt. Im Gamma-Summierer Sg wird der Istwert mit dem Sollwert $\tan \gamma_{i,soll}$ verglichen und die Abweichung auf den Eingang eines Gamma-Reglers Rg (Stromwinkelregler) geführt. Der Gamma-Regler Rg hat eine $PDT_1$-Charakteristik. Ausgangsgröße des Gamma-Reglers Rg ist die Drehfrequenz $f_i$ des Ständerstroms; mit dieser Größe wird der Steuersatz StW des Wechselrichterteils WR so gesteuert, daß der Stromwinkel $\gamma_i$ in der Asynchronmaschine ASM den für den momentanen Betriebszustand und unter Berücksichtigung der vorgegebenen Werte für Drehzahl bzw. Drehmoment und Luftspaltfluß immer den richtigen Wert besitzt.

Am Ausgang des Gamma-Reglers Rg wird die Führungsgröße für den Steuersatz StW des Wechselrichterteils WR abgegriffen und als Istwert $f_{i,ist}$ für die Ständerstromfrequenz einem Frequenz-Summierer Sf zugeführt, wo er mit dem vorgegebenen Sollwert für die Frequenz $f_{i,soll}$ verglichen wird. Die Abweichung wird auf den Eingang eines Frequenzreglers Rf mit PI-Charakteristik gegeben. Am Ausgang des Frequenzreglers Rf erscheint der Sollwert $M_{soll}$ für das Drehmoment der Maschine ASM. Der Sollwert $M_{soll}$ wird gemeinsam mit einem Vorgabewert $\Phi_{soll}$ für die Größe des Luftspaltflusses an den Eingang eines Koordinatentransformators K gelegt, der die Eingangsgrößen aus dem rechtwinkligen Koordinatensystem R in ein Polarkoordinatensystem P umwandelt. Folgerichtig erscheinen am Ausgang des Koordinatentransformators K der Sollwert $i_{1,soll}$ für den eingeprägten Ständerstrom und der Sollwert $\gamma_{i,soll}$ für den Stromwinkel zwischen dem Flußvektor $\Phi$ und dem Ständerstrom $I_1$. Auch der Sollwert $\gamma_{i,soll}$ des Stromwinkels $\gamma_i$ wird in einem Funktionsgenerator FG 1 in den entsprechenden Tangens-Wert umgewandelt und dem Gamma-Summierer Sg zugeführt.

Es wäre prinzipiell möglich, den Sollwert und den Istwert des Stromwinkels $\gamma_i$ direkt zu vergleichen und als Eingangssignal für den Gamma-Regler Rg zu verwenden. Die Umwandlung des Stromwinkels $\gamma_i$ in entsprechenden Tangens-Wert hat jedoch den Vorteil, daß der Stromwinkel-Regelkreis unabhängig von dem vorgegebenen Wert $\Phi_{soll}$ für den Luftspaltfluß konstante Verstärkung besitzt. Damit ist ohne weiteres ein Betrieb der Asynchronmaschine mit Feldschwächung möglich, was bei den bekannten Regelkreisen entweder nicht oder nur unter Verwendung adaptiver Verstärker möglich ist.

Die unmittelbare Verwendung des Stromwinkels $\gamma_i$ als zu regelnde Größe ermöglicht es, ein Kippen der Asynchronmaschine zu verhindern. Außerdem ist es möglich, die Maschine ohne besondere Maßnahmen anzufahren; Hochlaufintegratoren oder ähnliches, wie sie beim Stand der Technik verwendet werden, sind nicht erforderlich.

Der Vollständigkeit halber soll darauf hingewiesen werden, daß der in der Fig. 2 gezeigte Regelkreis eigentlich kein Regelkreis für die mechanische Drehzahl des Rotors der Asynchronmaschine ist, sondern ein Regelkreis für die Drehfrequenz $f_i$ des Ständerstroms $I_1$. Um von der Drehfrequenz des Ständerstroms auf die mechanische Drehfrequenz des Rotors zu kommen, muß die Schlupffrequenz berücksichtigt werden. Bei hohen Genauigkeitsanforderungen an die Konstanz der mechanischen Rotordrehzahl muß die Schlupffrequenz durch einen entsprechenden Zusatz zum Regelkreis berücksichtigt werden.

Eine weitere Verbesserung des Regelkreises läßt sich dadurch erreichen, daß der Sollwert $\Phi_{soll}$ für den Luftspaltfluß am Eingang des Koordinatenwandlers K während des Feldschwächbetriebs von einem überlagerten Klemmenspannungsregler, wie er üblicherweise bei Reglern nach dem Stand der Technik vorgesehen ist, vorgegeben wird.

## Patentansprüche

1. Vorrichtung zur Regelung von Drehzahl und/ oder Drehmoment einer Asynchronmaschine (ASM), die von einem Zwischenkreisumrichter (GR, L, WR) mit eingeprägtem Strom gespeist wird, mit einem Stromregelkreis (Si, Ri, StG), der auf den Gleichrichterteil (GR) des Umrichters einwirkt, mit einem Stromwinkelregelkreis, der einen Stromwinkelsummierer (Sg) zur Bildung der Differenz zwischen Sollwert und Istwert des Stromwinkels enthält, einem Stromwinkelregler (Rg), der aus der Sollwert-Istwert-Differenz des Stromwinkels die Führungsgröße für die Frequenz des Ständerstroms ($I_1$) am Ausgang des Wechselrichterteils (WR) ableitet und mit einer Koordinatentransformation, bei der die Signale für Luftspaltfluß ($\Phi_{soll}$) und Drehzahl bzw. Drehmoment ($M_{soll}$) aus dem rechtwinkligen Koordinatensystem in das Polarkoordinatensystem transformiert werden, dadurch gekennzeichnet, daß ein Gamma-Diskriminator (GD) durch Erfassen der Phasenverschiebung ($\varphi$) zwischen Ständerstrom ($I_1$) und Ständerspannung ($U_1$) der Asynchronmaschine (ASM) den Stromwinkel ($\gamma_{i\,ist}$) zwischen dem Luftspaltvektor ($\Phi$) und dem Ständerstromvektor ($I_1$) angenähert als Differenz zwischen 90° und dem Phasenverschiebungswinkel ($\varphi$) ermittelt und daß die Führungsgröße ($f_{i\,ist}$) für den Wechselrichterteil (WR) gleichzeitig der Istwert in einem übergeordneten Regelkreis für Drehzahl bzw. Drehmoment der Asynchronmaschine (ASM) ist.

2. Vorrichtung nach Anspruch 1, dadurch gekennzeichnet, daß der Stromwinkelregler (Rg) eine PDT$_1$-Charakteristik besitzt.

3. Vorrichtung nach Anspruch 1 oder 2, dadurch gekennzeichnet, daß der Stromwinkelsummierer (Sg) die Differenz zwischen dem Tangens des Stromwinkelsollwertes (tan $\gamma_{i\,soll}$) und dem Tangens des Stromwinkelistwertes (tan $\gamma_{i\,ist}$) bildet.

4. Vorrichtung nach Anspruch 3, dadurch gekennzeichnet, daß die Verzögerung im Stromwinkelregelkreis möglichst gut mit der Verzögerung im Stromregelkreis übereinstimmt.

5. Vorrichtung nach wenigstens einem der Ansprüche 1 bis 4, dadurch gekennzeichnet, daß der Sollwert ($\Phi_{soll}$) für den Luftspaltfluß zur Koordinatentransformation im Feldschwächbetrieb von einem übergeordneten Klemmenspannungsregler bestimmt ist.

## Claims

1. Device for regulating the rotational sped and/or torque of an asynchronous machine (ASM) which is fed with impressed current by an indirect direct-current converter (GR, L, WR), containing a current control loop (Si, Ri, StG) which acts on the rectifier section (GR) of the converter, a current-angle control loop which contains a current-angle summing section (Sg) for forming the difference between the nominal value and the actual value of the current-angle, a current-angle regulator (Rg) which derives, from the nominal-value/actual-value difference of the current angle the reference variable for the frequency of the stator current ($I_1$) at the output of the inverter section (WR) and involving a transformation of coordinates in which the signals for the air-gap flux ($\Phi_{soll}$) and rotational speed or torque ($M_{soll}$) are transformed from the rectangular system of coordinates into the polar system of coordinates, characterised in that a gamma discriminator (GD) determines, by detecting the phase shift ($\varphi$) between the stator current ($I_1$) and the stator voltage ($U_1$) of the asynchronous machine (ASM), the current angle ($\gamma_{i\,ist}$) between the air-gap flux vector ($\Phi$) and the stator current vector ($I_1$) in approximation as the difference between 90° and the angle of phase shift ($\varphi$) and that the difference variable ($f_{i\,ist}$) for the inverter section (WR) is simultaneously the actual value in a higherorder control loop for the rotational speed or torque of the asynchronous machine (ASM).

2. Device according to Claim 1, characterised in that the current-angle regulator (Rg) has a PDT$_1$ characteristic.

3. Device according to Claim 1 or 2, characterised in that the current-angle summing section (Sg) forms the difference between the tangent of the nominal currentangle value ($\tan \gamma_{i,\,soll}$) and the tangent of the actual current-angle value ($\tan \gamma_{i,\,ist}$).

4. Devise according to Claim 3, characterised in that the delay in the current-angle control loop matches the delay in the current control loop as well as possible.

5. Device according to at least one of Claims 1 to 4, characterised in that the nominal value ($O_{soll}$) for the air-gap flux for the transformation of coordinates in the field-weakening mode of operation is determined by a higherorder terminal voltage regulator.

## Revendications

1. Dispositif pour réguler le nombre de tours et/ou le moment rotatif d'une machine asynchrone (ASM) qui est alimentée par un mutateur à circuit intermédiaire (GR, L, WR) en courant appliqué et comportant un circuit de régulation de courant (Si, Ri, StG) qui agit sur la partie redresseuse (GR) du mutateur, un circuit de régulation de l'angle de courant qui comprend un dispositif sommateur d'angle de courant (Sg) pour former la différence entre la valeur nominale et la valeur réelle de l'angle de courant, un régulateur d'angle de courant (Rg), qui dérive, à partir de la différence entre la valeur nominale et la valeur réelle de l'angle de courant, la grandeur de guidage pour la fréquence du courant de rotor ($I_1$) à la sortie de la partie onduleur (WR) et une transformation de coordonnées selon laquelle les signaux pour le flux d'entrefer ($\Phi_{soll}$) et le nombre de tours ou le moment rotatif ($M_{soll}$) sont transformés du système de coordonnées rectangulaires dans le système de coordonnées polaires, dispositif caractérisé en ce qu'un discriminateur Gamma (GD) obtient, en détectant le déphasage ($\varphi$) entre le courant de rotor ($I_1$) et la tension de rotor ($U_1$) de la machine asynchrone (ASM), l'angle de courant ($\gamma_{i,\,ist}$) entre le vecteur de flux d'entrefer ($\Phi$) et le vecteur de courant de rotor ($I_1$) approximativement comme la différence entre 90° et l'angle de déphasage ($\varphi$) et en ce que la grandeur de guidage ($f_{i\,ist}$) pour la partie onduleur (WR), et qu'en même temps la valeur réelle dans un circuit de régulation superposé, est destinée au nombre de tours ou au moment rotatif de la machine asynchrone (ASM).

2. Dispositif selon la revendication 1, caractérisé en ce que le régulateur d'angle de courant (Rg) possède une caractéristique $PDT_1$.

3. Dispositif selon la revendication 1 ou la revendication 2, caractérisé en ce que le dispositif de sommation d'angle de courant (Sg) forme la différence entre la tangente de la valeur nominale d'angle de courant ($\tan \gamma_{i,\,soll}$) et la tangente de la valeur réelle d'angle de courant ($\tan \gamma_{i,\,ist}$).

4. Dispositif selon la revendication 3, caractérisé en ce que le retard du circuit de régulation d'angle de courant coïncide aussi bien que possible avec le retard du circuit de régulation de courant.

5. Dispositif selon au moins l'une des revendications 1 à 4, caractérisé en ce que la valeur nominale ($\Phi_{soll}$) pour le flux d'entrefer est déterminée, pour la transformation des coordonnées, lors du fonctionnement avec atténuation du champ par un régulateur de tension de bornes, superposé.

Fig. 1

Fig. 2